# EUROPEAN PATENT SPECIFICATION

(11) **EP 1 096 821 B1**
(45) Date of publication and mention of the grant of the patent: **20.07.2005**
(21) Application number: 00500208.4
(22) Date of filing: 06.10.2000
(51) Int. Cl.: H04Q 7/34

(54) **Portable system for acquisition of traffic and configuration data of the GSM/DCS mobile network**
Tragbares System für die Erfassung von Verkehrs- und Konfigurations-Daten eines GSM/DSC Mobilnetzes
Système portable d'acquisition de données relatives au trafic et à la configuration d'un réseau mobile GSM/DCS

(30) Priority: 06.10.1999 ES 9902203
(43) Date of publication of application: 02.05.2001
(73) Proprietor: Telefonica, S.A., 28013 Madrid (ES)
(72) Inventor: Telefonica,S.A. Wsewolod Warzansky Garcia, 28020 Madrid (ES); Telefonica,S.A. Fillmore,David Ian, 28020 Madrid (ES); Telefonica,S.A. Ruiz Aragon,Ma.del Pilar, 28020 Madrid (ES); Telefonica,S.A. Canto, Rafael, 28020 Madrid (ES); Telefonica, S.A. Tierno, Alfonso, 28020 Madrid (ES)
(74) Representative: Sanchez del Campo Gonzalez de Ubierna, Ramon

(56) References cited:
- US-A- 5 451 839
- LUNDQVIST R: "TEMS - A SYSTEM FOR TESTING AND MONITORING AIR INTERFACES" ON - ERICSSON REVIEW, ERICSSON. STOCKHOLM, SE, vol. 73, no. 1, 1996, pages 34-44, XP000584599 ISSN: 0014-0171
- PFITZMANN D ET AL: "DIE TESTMOBILSTATION (TMS) EIN MESS- UND TESTGERAET FUER DAS GSM-SYSTEM" , ITG FACHBERICHTE, VDE VERLAG, BERLIN, DE, NR. 124, PAGE(S) 467-476, XP000576901 ISSN: 0932-6022 * page 467, line 32 - page 468, line 3 * * page 470, line 40 - line 49 * * figures 4,5 *

## Description

### BACKGROUND OF THE INVENTION

The present specification refers to an application for a Patent of Invention, referring to a portable - system for acquisition of traffic and configuration - data of the GSM/DCS mobile network, starting from a radio interface, the purpose of which is to provide a system obtaining information about the cell configuration of the GSM/DCS mobile network, from any operator accessible from the geographical point where he/she is located, as well as statistics of the access attemps to said cells, power levels of different carriers, interferences, and occupation statistics of - radioelectrical spectrum.

### FIELD OF THE INVENTION

The present invention will find application in the telecommunications fiels, and more specifically, in the engineering and planning of the GSM (Global Sysyem for Mobile Communications, using a 900 MHz band), and DCS (Digital Cellular System, using a 1800 MHz band)mobile telephony networks.

### RELATED ART

The planning of a mobile telephony network is a dynamic process requiring not only an initial phase preceding the implantation thereof, performed with the assistance of planning tools, but it must be capable of adapting itself to the demand evolution and of the own network.

It is necessary, therefore, a motorization of the configuration and use of different recourses, which allows those points producing jams to be detected, and it is necessary to display new infrastructures, or where, owing to various reasons, it is necessary a replanning, paying attention not only to the capacity, but to parameters associated with the planning of radio (interferences, power received from different base stations, etc.).

The parameters extraction of a cellular telephony operator network starting from the data sent by this operator at the radio interface, is a functional character offered, at present, by engineering telephones marketed by different suppliers of mobile terminals.

Therefore the ERICSSON TEMS unit is capable of obtaining the mobile network configuration parameters of an operator by using engineenng telephones connected to a computer.

Nevertheless, these units do not offer any information about the access attemps on the part of other cellular ones, neither interference measures on the radiofrequence carriers, nor occupation statistics of radioelectrical spectrum.

On the other hand, the information related to access of cellular telephones is offered, now, by management systems from different suppliers of the units forming an operator network.

This information is obtained from that acquired by base stations, and it is not possible to obtain information at different points of the location of same.

On the other hand, it requires to have access to the management systems of the units, and it is totally independent of the software of suppliers.

On the applicant's side, he is not aware of the existence, at present, of any invention having as purpose in its context to provide a system obtaining information - about the cells configuration of the GSM/DCS mobile network of any operator accessible from the geographical point wherein he/she is located, as well as statistics of access attemps to said cells, power levels of different carriers, interferences, and occupation statistics of radioelectrical spectrum.

An evident solution to the present problems in this matter would be to rely on an invention presenting appropiate characteristics to fulfill those deficiencies checked to-day.

### SUMMARY OF THE INVENTION

The present invention provides a portable system which permits collecting a network configuration and traffic information, as claimed in claim 1.

In a more specific way, the portable system for acquisition of traffic and configuration data of the GSM/DCS mobile network starting from a radio interface of the invention is basically constituted starting from a unit or equipment gathering the measure or Radio Sensor, fundamentally consisting of two independent monoband sensors (GSM and DCS, respectively), gathering data from the radio interface within the corresponding frequency band, as well as through a graphic Presentation Terminal, where the obtained results can be visualized, and it is to be noted that the communication between both independent monoband sensors GSM and DCS and the graphic presentatio terminal is managed by a common interface module.

Each of the monoband sensors consists of two receiving chains which are intercommunicated each other, the first of them being syntonized to the frequency of the DLNK (downlink from base station to mobile station) of the radiochannel CO -once found in the cell-, and the second one being syntonized to that of ULNK (uplink from mobile station to base station).

Since the value of said frequency, as well as the - information about the synhronism and structure of the channels used, is obtained from the diffusion channels (downlink), the second receiving chain requires the information taken out by the first one to operate.

Said information, as well as that taken out from the channel RACH by the chain of the ULNK, is interchanged by means of the interprocessor interface.

In each chain, two large functional blocks are distinguished, to wit:
- A radiofrequency module (RF), basically consisting of a receiver taking out the demodulated Iₐ, Qₐ analog signals, and it is to be noted that these initials corespond to on-phase and quadrature components of the' demodulated signal.
- A digital processing module digitizing said signals, processing them and taking out the relevant information thereof.
- A memory module storing the information generated by the previous processing.

The interfaces with the outside of the Radio Sensor are as follows, to wit:
- An interface interchanging data with the presentation PC, and
- Two antenna interfaces (one GSM and one DCS).

The functions performed by each module are as follows, to wit:
- The RF module of the downlink (DLNK) is a receiver performing the analog processing of the signals gathered by the antenna until taking out the analog signal on-base band (on-phase and quadrature I/Q compents).

Their operations are: filtering, amplification, intermediate frequency conversion, and demodulation, and they can be syntonized on all the frequency band in sense BTS (Base Transceiver Station of a cellular network) → Mobile Station of band R-GSM (921-960 MHz) for GSM sensor, and band DCS-1800 (1710-1785MHz) for DCS sensor.
- RF module of ULNK, that is a receiver having the same functional character as the preceding one, but being capable of being syntonized on the frequency band of sense Mobile Station → BTS of band R-GSM (876-915 MHz) for sensor GSM, and band DCS-1800 (1710-1785 MHz) for sensor DCS.
- Digital processing module of DLNK, performing the following functions:
- Sampling of signals I and Q received (on-phase and quadrature components of analog signal on-band base proceeding from the radiofrequency module of DLNK).
- Equalization of said signals.
- Decoding according to the coding rules determined for GSM channels (GSM 05,02).
- Extraction of information messages of the system of layer level 3 of Protocol of the Radio Resources Management (GSM 04,08).
- Control of a frequency synthetizer for selecting the wanted RF carrier.
- Synchronization of the time base of receiver with that defined by the synchronization channel (SCH) spreaded by the base station so that the mobile ones synchronize with it.
- Power measure received and evaluation of interferences
- Gathering of data from the digital processing module of ULNK, and
- Sending of the data gathered at both DLNK and ULNK to the interface module.

The digital processing module of the ULNK performs the following functions, to wit:
- Sampling of signals I and Q received (on-fase and quadrature components of the analog signal on-band base proceeding from the radiofrequency module of ULNK.
- Equalization of said signals.
- Decoding according to the coding rules determined for the GSM channels (GSM 05,02).
- Extraction of messages of access of RACH channel (GSM 04,08), (RACH = Random Access Channel used by mobile stations to ask the network for the assignement of a dedicated channel), and alaboration of - statistics.
- Power measure received and evaluation of interferences.
- Sending of statistics to the digital processing module of DLNK.
- The memory module retains the statistical information generated by the processing modules.
- The interface module performs management functions of data interchange between the radio sensors; more specifically, the digital processing module of the ULNK, and the graphic terminal of presentation, looking after, moreover, the location of all the digital processing modules.
- The graphic terminal of presentation allows the data gathered by the radio sensor to be visualized, and retaining them in files for a later generation of reports, allowing, also, from this terminal, the base station(s) to be monitorized and the parameters as presented, to be selected.

From every base station, the parameters sent over their diffusion channel can be presented, as well as the values of power received, the channel transfer function, and the interference with other RF carriers on the same frequency (co-channel interference) along the measure period.

Furthermore, statistics on the access attemps of the mobile terminals to said cell can be visualized.

### DESCRIPTION OF THE DRAWINGS

In order to complement this description and aid to a better understanding of the characteristics of the invention, the appending set of drawings, which are a part of this specification, shows,by way of illustrative and non-limiting example, the following:-

Figure 1 corresponds to a functional block diagram of the portable system for acquisition of traffic and configuration data of the GSM/DCS mobile network starting from a radio interface of the invention.

Figure 2 shows a diagram in detail of a monoband - sensor.

### DESCRIPTION OF THE PREFERRED EMBODIMENT OF THE INVENTION

According to these figures, it can be seen that the portable system for acquisition of traffic and configuration data of the GSM/DCS mobile network starting from a radio interface basically consists of a graphic terminal of presentation (1) and a measure unit or radio sensor (2), a personal computer (PC) with operative system Windows-95 being used as graphic terminal of presentation (1), incorporating a communication interface (3) between said terminal and the radio sensor configured like an asynchronous serial interface RS-232.

The radio sensor (2) is a portable unit fed by a battery, with operative capacity without connecting to the network, so making easy to be located at different geographical places.

The interface module (3) is based on a general purpose microprocessor acceding to the data gathered by monoband sensors (10) and (20), and sending them thru a serial interface.

On the other hand, it receives commands proceeding from, through said interface (3), the terminal (1), and distributes them to the module concerned.

The digital processing modules are based on a digital processor of signal (GSM), together with converters digitalizing the base-band signals I and Q coming from radiofrequency modules.

They communicate each other through an interprocessor serial interface, and they communicate with the memory module in order to store the results, waiting for being gathered together by the presentation terminal.

The radiofrequency modules are heterodyne receivers syntonized to the frequenct of a selected channel, having an outer antenna interface, coaxial type, thru which it receives radiofrequency signals.

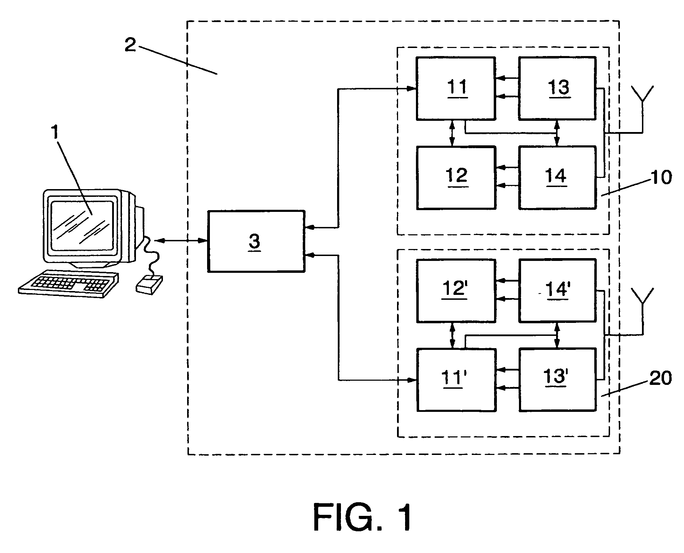

As can be seen on figure 1, the sensors GSM (10) and DCS (20) are configured starting from a processing module DLNK (11) and (11'), respectively; a processing module ULNK (12) and (12'), respectively; a RF module DLNK (13) and (13'), respectively, as well as a RF module ULNK (14) and (14'), respectively, at each of the monoband sensors GSM and DCS above mentioned.

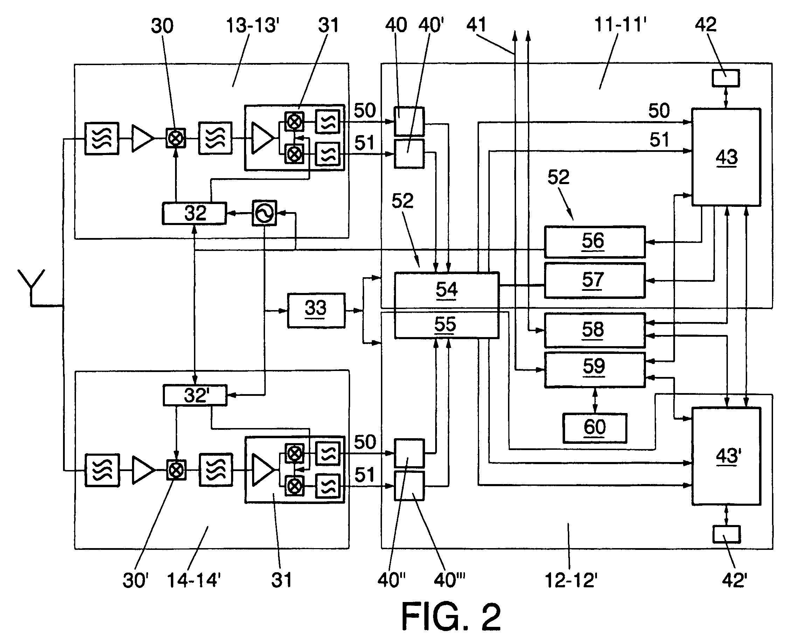

Figure 2 shows both RF modules DLNK (13) and (13') presenting a converter (30), a demodulating amplifier (31), and a synthesizer (32), having quadrature and on-phase components of the demodulated signal I and Q (50) and (51), respectively, connected with the processing module (11) and (11') DLNK, which presents - two analog to digital converters (A/D) (40) and (40'), as well as the corresponding output (41) to the interface (3) with microprocessor, having also inside the processing module DLNK (11) and (11'), two RAM memories (42) and (42'), a quadrature and on-phase component of the demodulated signal (50) and (51), a signal digital processor (43), interconnected with synthesizing and programming blocks (56), as well as with - programming blocks of synchronisation and sampling (57), a block of access to the memory of the signal digital processor (43), said block of access being referenced as (58), as well as a block of access to the memory of results (59) and memory of results (60) in the strict sense, having a second signal processor (43'), and a programmable logic device (52) fitted with a synchronism and sampling logic block (54), and a conversion block (55), the blocks (58), (59) and (60), as well as (55) and the signal digital processor (43') being incorporated in the processing module ULNK (12)-(12'), which presents, also, two analog to digital converters (A/D) (40'') and (40''').

Lastly, figure 2 shows a synthesizer (32'), a converter (30') and a demodulating amplifier (31') incorporated in the RF module ULNK (14) and (14'), there being a clock regenerator (33) between the RF module DLNK (13) and (13') and the RF module ULNK (14) and (14').

It should be pointed out that the invention uses a BCCH channel (Broadcast Control Channel), which is a multibroadcasting channel broadcast by the base station, selected from the graphic terminal, apart from the configuration data broadcast on said channel.

It is not considered necessary to extend this description for any expert in the art to understand the scope of the invention and the advantages derived from it.

## Claims

1. A portable measurement system which permits collecting a network configuration and traffic information of a GSM/DCS mobile network from a radio interface, **characterized by**:
- said portable measurement system adapted to be autonomous with respect to network elements and/or management systems;
- a graphic terminal (1) adapted to display the data collected by a radio sensor (2), wherein said data comprises the instantaneous and average power, the interferences of a Broadcast Control Channel (BCCH), the BCCH being selected from the graphical terminal, and configuration data transmitted in the BCCH, real time and statistical data received from a Random Access Channel (RACH), the RACH being selected from the graphic terminal (1) and interferences and usage level of the radio-electromagnetic spectrum, wherein the type of interference is identified;
- a radio sensor (2) comprising:
- a monoband GSM sensor (10) comprising a downlink processing module (11), an uplink processing module (12), a radiofrequency downlink module (13), a radiofrequency uplink module (14) and a memory module;
- a monoband DCS sensor (20) comprising a downlink processing module (11'), and uplink processing module (12'), a radiofrequency downlink module (13'), a radiofrequency uplink module (14');
- the GSM and DCS downlink modules (11) and (11') are adapted to be connected to the memory module and to an interface module (3), the interface module (3) furthermore being adapted to be connected to the graphic terminal;
- the GSM (10) and DCS sensor (20) being incorporated in the radio sensor (2); and
- each monoband sensor is adapted to synchronize first on the frequency of the downlink broadcast control channel (BCCH) with one receiving chain to obtain information about the synchronization and structure of the channels in use and the second receiving chain is adapted to synchronize on the uplink frequency by using the information taken out from the downlink broadcast control channel.

2. Portable measurement system, according to claim 1, **characterized in that** the downlink processing modules which have a connection (41) to the interface (3), have two A/D analog-digital converters (40) and (40'), as well as an in-phase, quadrature component of the I and Q demodulated signal (50) and (51), RAM memory (42) and a digital signal processor (43) connected to a programming block and synthesizers (56), and a programming, synchronization and sampling block (57), these two blocks (56) and (57) corresponding to a programmable logic device or SPGA (52'), also having a second programmable logic device (52) equipped with a synchronism and sampling logic block (54) and conversion block (55), the block (55) being inside the uplink processing modules (12) and (12').

3. Portable measurement system, according to preceding claims, **characterized in that** the uplink processing module (12) and (12') incorporates a digital signal processor (43'), as well as a memory access block (58), a result memory access block (59) and a result memory block (60), likewise having two A/D analog-digital converters (40") and (41 "').

4. Portable measurement system, according to claim 1, **characterized in that** the radiofrequency downlink modules (13) and (13'), incorporate a converter (30), a modulation amplifier (31) and a synthesizer (32), in-phase, quadrature components of the simulated signal (50) and (51) being situated between said RF modules (13) and (13') and the downlink processing modules (11-11') respectively.

5. Portable measurement system which permits capturing the network configuration and traffic information of the GSM/DCS mobile network from the radio interface, according to claim 1, **characterized in that** the radiofrequency uplink modules (14) and (14') incorporate a synthesizer (32'), a converter (30') and a modulation amplifier (31'), as well as a clock generator interconnected with the radiofrequency downlink modules (13) and (13').

## Patentansprüche

1. Ein tragbares Messsystem, das den Empfang einer Netzwerk-Konfiguration und von Nutzdaten eines mobilen GSM/DCS-Netzwerks von einer Radio-Schnittstelle gestattet, **dadurch gekennzeichnet, dass**:
- das besagte tragbare Messsystem angepasst ist, um eigenständig in Bezug auf die Netzwerkelemente bzw. auf die Management-Systeme zu sein;
- ein Graphikterminal (1) angepasst ist, um die über den Radiosensor (2) empfangenen Daten anzuzeigen, wobei besagte Daten die augenblickliche und durchschnittliche Leistung, die Interferenzen eines Broadcast Control Channel (BCCH), wobei der BCCH aus einem Graphikterminal ausgewählt ist, in den BCCH übertragene Konfigurationsdaten, die von einem Random Access Channel (RACH) empfangene Echtzeitdaten und statistische Daten, wobei der RACH von dem Graphikterminal (1) ausgewählt ist, und die Interferenzen und den Benutzungs-Level des radioelektromagnetischen Spektrums umfassen, wobei die Art der Interferenz identifiziert wird;
- ein Radiosensor (2), der umfasst:
- einen Monoband-GSM-Sensor (10), der ein Downlink-Verarbeitungs-Modul (11), ein Uplink-Verarbeitungs-Modul (12), ein Hochfrequenz-Downlink-Modul (13), ein Hochfrequenz-Uplink-Modul (14) und ein Speichermodul umfasst;
- einen Monoband-DCS-Sensor (20), der ein Downlink-Verarbeitungs-Modul (11'), ein Uplink-Verarbeitungs-Modul (12'), ein Hochfrequenz-Downlink-Modul (13'), ein Hochfrequenz-Uplink-Modul (14') und ein Speichermodul umfasst;
- die GSM- und DCS-Downlink-Module (11) und (11') angepasst sind, um mit dem Speichermodul und mit dem Schnittstellenmodul (3) verbunden zu werden, wobei das Schnittstellenmodul (3) des weiteren dazu angepasst ist, mit dem Graphikterminal verbunden zu werden;
- wobei der GSM-(10) und der DCS-Sensor (20) in dem Radiosensor (2) integriert sind; und
- jeder Monoband-Sensor dazu angepasst ist, um zuerst auf der Frequenz des Downlink-Broadcast-Control-Channel (BCCH) mit einem Empfangskanal zu synchronisieren, um Informationen über die Synchronisation und die Struktur des belegten Kanals zu erhalten und der zweite Empfangskanal dazu angepasst ist, um auf der Uplink-Frequenz unter Verwendung der dem Downlink-Broadcast-Control-Channel entnommenen Informationen zu synchronisieren.

2. Tragbares Messsystem nach Anspruch 1, **dadurch gekennzeichnet, dass** die Downlink-Verarbeitungs-Module, die eine Verbindung (41) mit der Schnittstelle (3) besitzen, zwei A/D analog-digital Konverter (40) und (40'), sowie eine phasengleiche, um 90° phasenverschobene Komponente eines I und Q demodulierten Signals (50) und (51), einen RAM-Speicher (42) und einen digitalen Signal-Prozessor (43), die mit einem Programmierungsblock und einem Synthesizer (56) verbunden sind, und einen Programmierungs-, Synchronisations- und Samplingblock (57) besitzen, wobei diese zwei Blocks (56) und (57) einem programmierbaren Logikbauelement (52) oder SPGA (52') entsprechen, wobei sie ebenfalls ein zweites programmierbares Logikbauelement (52) besitzen, das mit einem Synchronismus- und Sampling-Logikbauelement (54) und mit einem Konversionsblock (55) ausgestattet ist, wobei sich der Block (55) im Innern der Uplink-Verarbeitungs-Module (12) und (12') befindet.

3. Tragbares Messsystem nach dem vorhergehenden Anspruch, **dadurch gekennzeichnet, dass** das Uplink-Verarbeitungsmodul (12) und (12') einen digitalen Signalprozessor (43'), sowie einen Speicher-Zugangs-Block (58), einen Ergebnis-Speicher-Zugangs-Block (59) und einen Ergebnis-Speicher-Block (60) integriert, wobei es gleichfalls zwei A/D analog-digitale Konverter (40'') und (41''') besitzt.

4. Tragbares Messsystem nach Anspruch 1, **dadurch gekennzeichnet, dass** die Hochfrequenz-Downlink-Module (13) und (13') einen Konverter (30), einen Modulationsverstärker (31) und einen Synthesizer (32) integrieren, wobei sich die phasengleichen, um 90° phasenverschobenen Komponenten des simulierten Signals (50) und (51) jeweils zwischen besagten HF-Modulen (13) und (13') und den Downlink-Verarbeitungs-Modulen (11-11') befinden.

5. Tragbares Messsystem, das das Einfangen der Netzwerk-Konfiguration und von Nutzdaten eines mobilen GSM/DCS-Netzwerks von einer Radio-Schnittstelle gestattet, nach Anspruch 1, **dadurch gekennzeichnet, dass** die Hochfrequenz-Uplink-Module (14) und (14') einen Synthesizer (32'), einen Konverter (30') und einen Modulations-Verstärker (31'), sowie einen Taktgenerator, der mit den Hochfrequenz-Downlink-Modulen (13) und (13') verbunden ist, integrieren.

## Revendications

1. Une installation de mesure portable permettant de récupérer la configuration de réseau et l'information de trafic d'un réseau mobile GSM/DCS depuis une interface radio, **caractérisée en ce que** :
- ladite installation de mesure portable est autonome par rapport aux éléments du réseau et/ou aux systèmes de gestion ;
- un terminal graphique (1) est adapté pour afficher les données recueillies par un capteur radio (2), dans laquelle lesdites données comprennent une puissance électrique instantanée et moyenne, les interférences d'un canal de signalisation diffusé (BCCH), le BCCH étant sélectionné à partir du terminal graphique, et les données de configuration transmises au BCCH, les données statistiques en temps réel étant envoyées d'un canal d'accès aléatoire (RACH), le RACH étant sélectionné à partir du terminal graphique (1) et les interférences et le niveau d'utilisation du spectre radio-électromagnétique , où le type d'interférence est identifié ;
- le capteur radio (2) comprend :
- Un capteur GSM monobande (10) comprenant un module de traitement en liaison descendante (11), un module de traitement en liaison montante (12), un module de radiofréquence en liaison descendante (13), un module de radiofréquence en liaison montante (14) et un module de mémoire ;
- Un capteur DCS monobande (20) comprenant un module de traitement en liaison descendante (11'), un module de traitement en liaison montante (12'), un module de radiofréquence en liaison descendante (13'), un module de radiofréquence en liaison montante (14') ;
- Les modules en liaison descendante GSM et DCS (11) et (11') ont été conçus pour être adaptés au module de mémoire ainsi qu'à un module d'interface (3), le module d'interface (3) ayant, par ailleurs, été conçu pour être relié au terminal graphique ;
- Les capteur GSM (10) et DCS (20) étant intégrés au capteur radio (2) ; et
- Chaque capteur monobande a été conçu pour synchroniser d'abord sur la fréquence du canal de signalisation diffusé (BCCH) en liaison descendante, une chaîne de réception récupérant l'information sur la synchronisation et la structure des canaux utilisés et la deuxième chaîne ayant été conçue pour synchroniser sur la fréquence sortante au moyen des informations récupérées à partir du canal de signalisation diffusé en liaison descendante.

2. Installation de mesure portable selon la revendication 1, **caractérisée en ce que** les modules de traitement en liaison descendante reliés (41) à l'interface (3), sont dotés de deux convertisseurs analogiques-numériques (40) et (40'), de même que de composantes en phase et déphasée du signal démodulé I et Q (50) et (51), d'une mémoire RAM (42) et d'un processeur numérique de signal (43) relié à un bloc de programmation et à des synthétiseurs (56) et à un bloc de programmation, de synchronisation et d'échantillonnage (57), ces deux blocs (56) et (57) correspondant à un réseau logique programmable ou SPGA (52'), un deuxième réseau logique programmable (52) étant doté d'un bloc logique de synchronisation et d'échantillonnage (54) et d'un bloc de conversion (55), ce bloc (55) étant situé à l'intérieur des modules de traitement en liaison ascendante (12) et (12').

3. Installation de mesure portable selon les revendications précédentes, **caractérisée en ce que** le module de traitement en liaison ascendante (12) et (12') comprend un processeur numérique de signal (43') ainsi qu'un bloc d'accès mémoire (58), un bloc d'accès mémoire de résultat (59) et un bloc de mémoire de résultat (60) étant également doté de deux convertisseurs analogiques-numériques (40'') et (41''').

4. Installation de mesure portable selon la revendication 1, **caractérisée en ce que** les modules de radiofréquence en liaison descendante (13) et (13'), comprennent un convertisseur (30), un amplificateur de modulation (31) et un synthétiseur (32), des composantes en phase et déphasées du signal simulé (50) et (51) étant respectueusement situées entre lesdits modules RF (13) et (13') et les modules de traitement en liaison descendante (11-11').

5. Installation de mesure portable permettant de récupérer la configuration de réseau et l'information de trafic d'un réseau mobile GSM/DCS depuis une interface radio selon la revendication 1, **caractérisée en ce que** les modules de radiofréquence en liaison ascendante (14) et (14') comprennent un synthétiseur (32'), un convertisseur (30') et un amplificateur de modulation (31'), ainsi qu'un générateur de cycles interconnectés avec des modules de radiofréquence en liaison descendante (13) et (13').
